# EUROPEAN PATENT APPLICATION

(11) **EP 1 420 531 A1**
(43) Date of publication of application: **19.05.2004**
(21) Application number: 02758788.0
(22) Date of filing: 06.08.2002
(51) Int. Cl.: H04J 1/00, H04J 13/04

(54) **MOBILE BODY COMMUNICATION SYSTEM, MULTI−CARRIER CDMA TRANSMISSION APPARATUS, AND MULTI−CARRIER CDMA RECEPTION APPARATUS**

(30) Priority: 23.08.2001 JP 2001253222
(71) Applicant: MITSUBISHI DENKI KABUSHIKI KAISHA, Tokyo 100-8310 (JP)
(72) Inventor: TANADA, Kazuo c/o Mitsubishi Denki K. K., Chiyoda-ku, Tokyo 100-8310 (JP)
(74) Representative: Pfenning, Meinig & Partner GbR
(86) International application number: PCT/JP2002/008031
(87) International publication number: WO 2003/019832

(57) **Abstract**

In a mobile communication system of the present invention, a multicarrier CDMA receiving apparatus corrects soft decision data by using an amplitude component of a channel estimate value, thereafter carries out a turbo decoding, selects an encoding rate based on reliability information for the decoded data, and notifies a transmitting apparatus of the encoding rate through an up link. The multicarrier CDMA transmitting apparatus carries out an encoding processing by using the notified encoding rate.

## Description

### TECHNICAL FIELD

The present invention relates to a mobile communication system that employs a multicarrier CDMA system, a multicarrier CDMA transmitting apparatus, and a multicarrier CDMA receiving apparatus. More particularly, the present invention relates to a transmitting apparatus and a receiving apparatus used in a frequency selective fading transmission line.

### BACKGROUND ART

A conventional mobile communication system that employs a multicarrier CDMA system will be explained below. Transmitter and receiver of a mobile communication system according to a multiple access system using a multicarrier CDMA system are described in, for example, literatures of "Performance comparisons of coherent SC/DS-CDMA, MC/DS-CDMA, MC-CDMA on down-link broadband radio packet transmission, the Institute of Electronics, Information and Communication Engineers, Technical Report of IEICE RCS99-130, pp. 63-70, October 1999", and "Overview of Multicarrier CDMA, IEEE Communications Magazine, pp. 126-133, December, 1997".

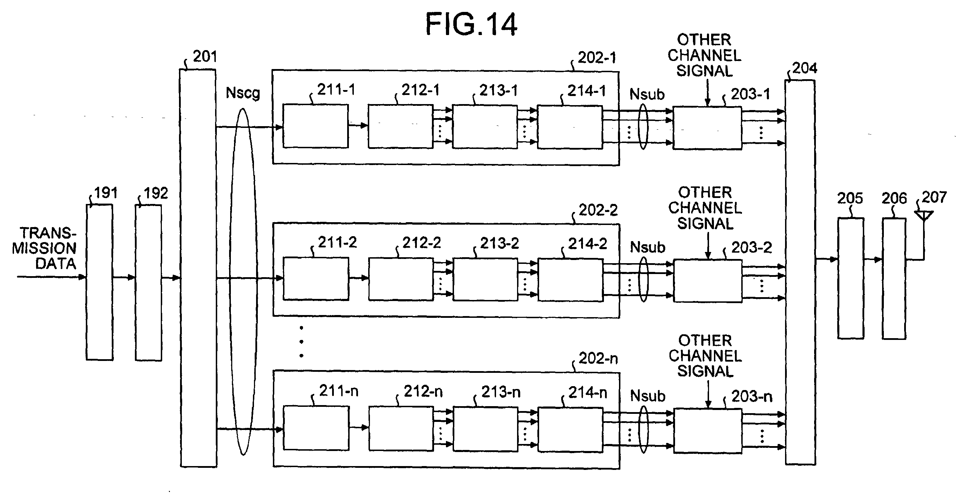

Fig. 14 shows a configuration of the conventional multicarrier CDMA transmitter described in the above literatures. In Fig. 14, 191 denotes a convolutional encoder, 192 denotes an interleaver, 201 denotes a serial-to-parallel converter (S/P), 202-1, 202-2, ..., and 202-n denote a first, a second, ..., and an N_{scg} (= n)-th subcarrier group modulation processors respectively, 203-1, 203-2, ..., and 203-n denote multiplexers respectively, 204 denotes an inverse Fourier transformer, 205 denotes a guard interval (GI) adder, 206 denotes a frequency converter, and 207 denotes an antenna. In each of the subcarrier group modulation processors, 211-1, 211-2, ..., and 211-n denote slot generators, 212-1, 212-2, ..., and 212-n denote copying sections, 213-1, 213-2, ..., and 213-n denote information modulators, and 214-1, 214-2, ..., and 214-n denote frequency spreading sections, respectively.

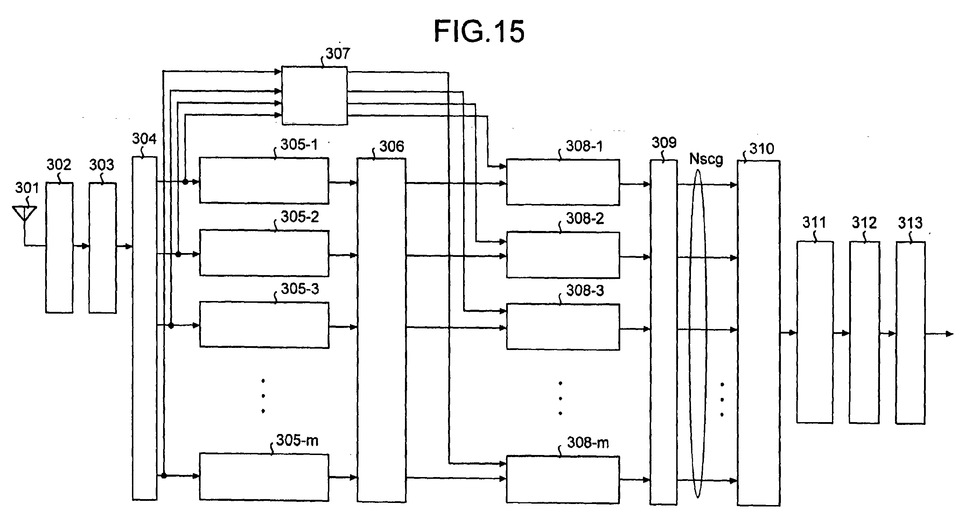

Fig. 15 shows a configuration of the conventional multicarrier CDMA receiver described in the above literatures. In Fig. 15, 301 denotes an antenna, 302 denotes a frequency converter, 303 denotes a guard interval (GI) remover, 304 denotes a Fourier transformer, 305-1, 305-2, 305-3, ..., and 305-m denote common pilot extractors respectively, 306 denotes a subcarrier-by-subcarrier channel estimator, 307 denotes a delay unit, 308-1, 308-2, 308-3, ..., and 308-m denote fading compensators respectively, 309 denotes a frequency inversely spreading section, 310 denotes a parallel-to-serial converter (P/S), 311 denotes a soft decision data preparing section, 312 denotes a de-interleaver, and 313 denotes a Viterbi decoder.

The operations of the conventional multicarrier CDMA transmitter and receiver that have the above structure will be explained. It is assumed that data transmission and reception are performed between a base station and a plurality of terminals.

First, the operation of the multicarrier CDMA transmitter will be explained. Transmission data to be transmitted to an optional terminal is input to the convolutional encoder 191. The convolutional encoder 191 carries out a convolutional coding to correct errors in the transmission data. The encoded data is input to the interleaver 192, where the input encoded data is interleaved so as to resolve a burst error that occurs in the frequency selective fading transmission line. The interleaved data is input to the serial-to-parallel converter 201, where the data is converted into parallel data so that a parallel number of the parallel data becomes N_{scg} (a predetermined integer). Pieces of the parallel data reach the subcarrier group modulation processors 202-1 to 202-n, respectively. The first to the N_{scg} -th subcarrier group modulation processors 202-1 to 202-n perform modulation processing in each subcarrier group unit, and carries out the same signal processing of the modulation processing on each subcarrier group. Therefore, the operation of the first subcarrier group modulation processor 202-1 will be explained here, and the explanation of the operation of the rest of the subcarrier group modulation processors will be omitted.

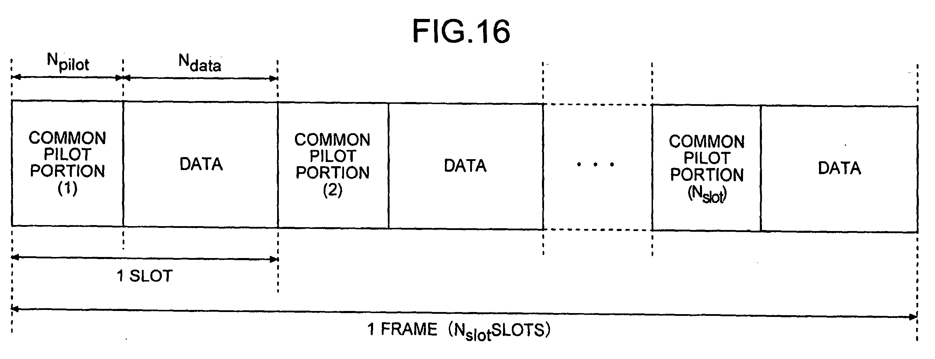

Of the parallel data output from the serial-to-parallel converter 201, a first data series is input to the subcarrier group modulation processor 202-1. The slot generator 211-1 divides the received data series into units of N_{data}, and adds a common pilot symbol to each header of the divided data, thereby to prepare one data slot and further a frame of N slots. Fig. 16 shows a frame format of a subcarrier. As shown in this drawing, the data slot consists of a pilot symbol portion (a known series), and a data portion.

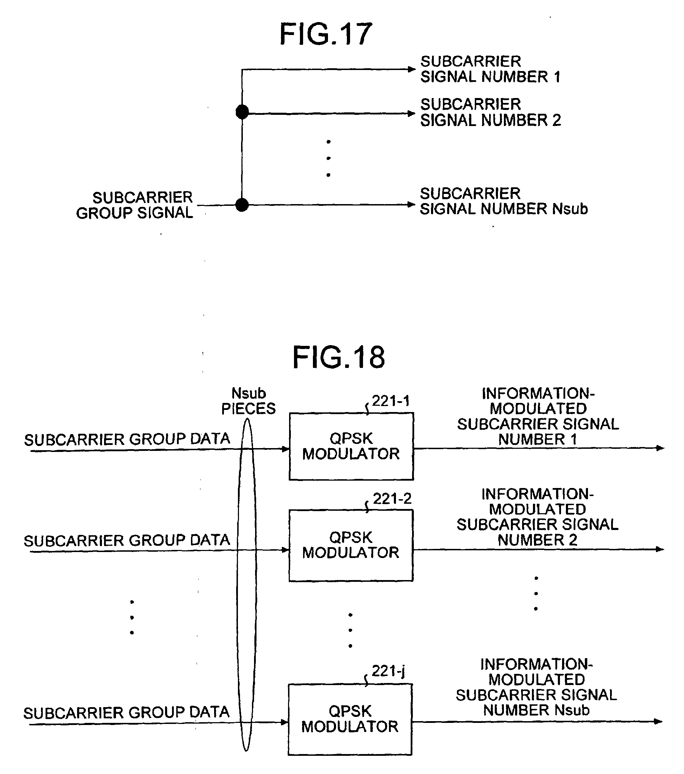

The copying section 212-1 receives the data slot of the first subcarrier group, copies the frame by a predetermined number of subcarriers N_{sub} (= m), and prepares the data slots of the N_{sub} subcarriers. Fig. 17 shows a configuration of each copying section. The copying section 212-1 outputs the N_{sub} data slots to the information modulator 213-1.

Fig. 18 shows a configuration of each information modulator. In Fig. 18, 221-1, 221-2, ..., and 221-j denote QPSK modulators respectively. The information modulator 213-1 receives the N_{sub} data slots, and carries out QPSK modulation on the data slots with the QPSK modulators 221-1 to 221-j respectively, and prepares N_{sub} information-modulated subcarrier signals. The information modulator 213-1 outputs the N_{sub} information-modulated subcarrier signals to the frequency spreading section 214-1.

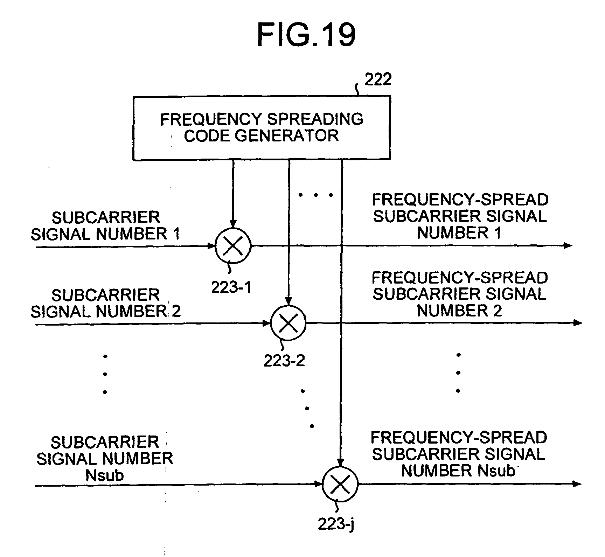

Fig. 19 shows a configuration of each frequency spreading section. In Fig. 19, 222 denotes a frequency spreading code generator, and 223-1, 222-2, ..., and 223-j denote multipliers, respectively. The frequency spreading section 214-1 performs the frequency spreading on the N_{sub} information-modulated subcarrier signals respectively by using mutually orthogonal frequency spreading codes (which are expressed as ±1) given in advance to a plurality of terminals or other transmission channels. More specifically, the frequency spreading section 214-1 multiplies the N_{sub} information-modulated subcarrier signals by each frequency spreading code output from the frequency spreading code generator 222. For the frequency spreading codes, Walsch codes as orthogonal codes are generally used. The frequency spreading section 214-1 outputs the N_{sub} subcarrier signals after the frequency is spread, to the multiplexer 203-1.

The multiplexer 203-1 receives the N_{sub} frequency-spread subcarrier signals, multiplexes these subcarrier signals (transmission signals to be transmitted to the terminals), and outputs the multiplexed subcarrier signals to the inverse Fourier transformer 204. At this time, the inverse Fourier transformer 204 receives also the multiplexed subcarrier signals obtained in the multiplexers 203-2 to 203-n in addition to the multiplexer 203-1 to receive N_{scg} × N_{sub} (= N_{c}) subcarrier signals in total.

The inverse Fourier transformer 204 carries out an inverse Fourier transformation processing on the received subcarrier signals, and outputs the inverse Fourier-transformed signals to the guard interval adder 205.

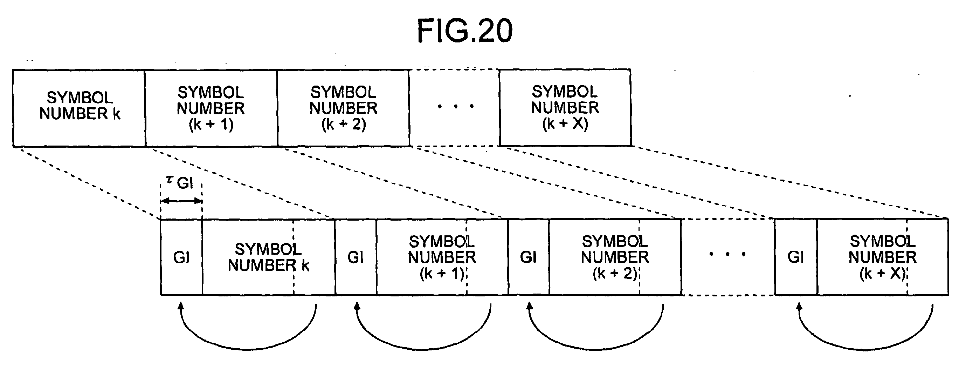

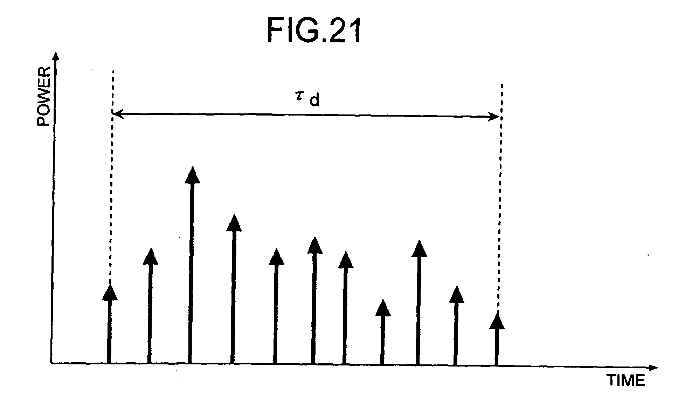

Fig. 20 shows how to add guard intervals. As shown at the upper portion of Fig. 20, the inverse Fourier-transformed signals are continuous signals of symbols. The guard interval adder 205 copies the latter portions of the symbols of the Fourier-transformed signals corresponding to a time τ_{GI}, and pastes these portions to the headers of the symbols. The guard interval adder 205 outputs the guard interval-added signals to the frequency converter 206. In general, τ_{GI} is set so as to be larger than the spread of delay waves on the transmission line, that is, τ_{d}, shown in Fig. 21. Fig. 21 shows one example of an impulse response on a frequency selective fading transmission line. In the mobile communication system, as waves are reflected, diffracted, and scattered according to surrounding buildings and topography, these waves (multi-path waves) arrive after passing through a plurality of transmission lines, and these waves interfere with each other (frequency selective fading).

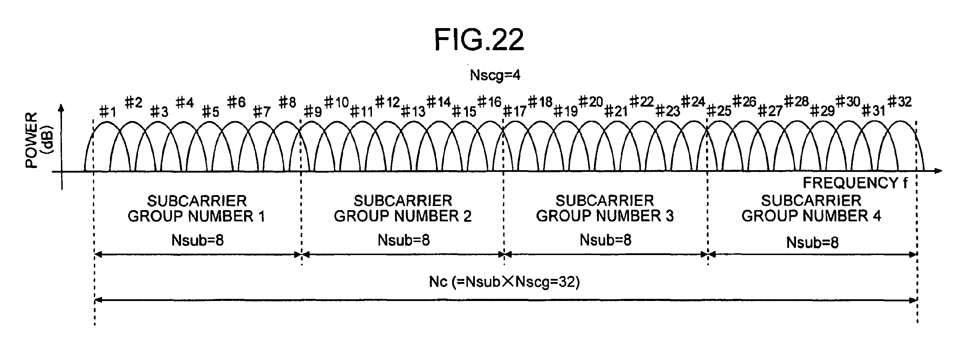

The frequency converter 206 carries out a predetermined frequency conversion processing on the received guard interval-added signals, and outputs the frequency-converted signals to the transmission lines for radio communication via the antenna. Fig. 22 shows modulation signals on the frequency axis when N_{scg} is equal to four and also when N_{sub} is equal to eight, for example.

The operation of the multicarrier CDMA receiving apparatus will be explained next with reference to Fig. 15. The frequency converter 302 receives, via the antenna 301, the signals influenced by the frequency selective fading on the radio communication lines, and converts these signals into base band signals. The frequency converter 302 outputs the base band signals to the guard interval remover 303.

The guard interval remover 303 removes the guard intervals (GI) from the received base band signals, and generates the continuous signals of symbols (refer to the upper portion in Fig. 20). The guard interval remover 303 outputs the generated signals to the Fourier transformer 304.

The Fourier transformer 304 carries out a Fourier transformation processing on the received signals, and generates N_{scg} × N_{sub} (= N_{c}) subcarrier signals. The Fourier transformer 304 outputs the subcarrier signals to the delay unit 307 and the common pilot extractors 305-1 to 305-m, respectively, for each subcarrier.

The common pilot extractors 305-1 to 305-m extract common pilot portions from the received subcarrier signals respectively. The subcarrier-by-subcarrier channel estimator 306 adds in-phase channel estimate values of adjacent three subcarriers, thereby to calculate the channel estimate value for each subcarrier whose noise component is suppressed. The subcarrier-by-subcarrier channel estimator 306 outputs the channel estimate value for each subcarrier to the fading compensators 308-1 to 308-m for each subcarrier.

On the other hand, the delay unit 307 receives each Fourier-transformed subcarrier signal, and delays each signal to adjust delays due to the processing in the common pilot extractors 305-1 to 305-m and the processing in the subcarrier-by-subcarrier channel estimator 306. The delay unit 307 outputs the respective delayed subcarrier signals to the fading compensators 308-1 to 308-m for each subcarrier.

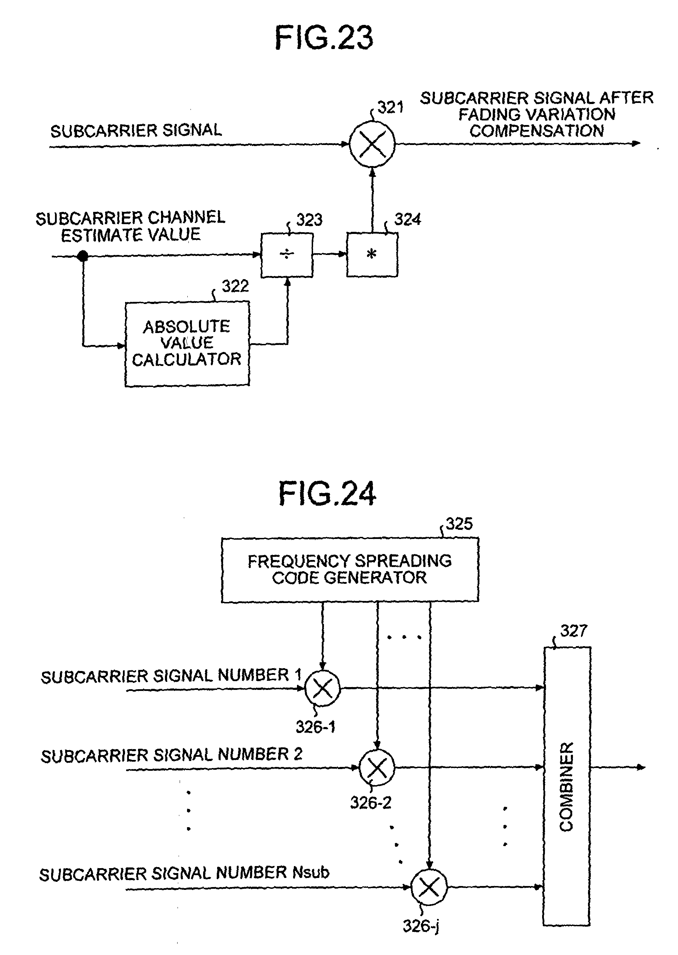

Fig. 23 shows a configuration of each fading compensator. In Fig. 23, 321 denotes a multiplier, 322 denotes an absolute value calculator, 323 denotes a divider, and 324 denotes a complex conjugate calculator. The absolute value calculator 322 receives the channel estimate value for each subcarrier, and calculates an absolute value of this estimate value. The divider 323 divides the received channel estimate value for each subcarrier by the calculated absolute value. The complex conjugate calculator 324 receives the result of the division, and calculates a complex conjugate value of the result of the division. The multiplier 321 multiplies the received subcarrier signal by the calculated complex conjugate value, and outputs the fading-compensated subcarrier signal as the result of the multiplication. The multiplier 321 outputs the fading-compensated subcarrier signal to the frequency inversely spreading section 309.

Fig. 24 shows a configuration of the frequency inversely spreading section. In Fig. 24, 325 denotes a frequency spreading code generator, 326-1, 326-2, ..., and 326-j denote multipliers, and 327 denotes a combiner. For example, N_{sub} subcarrier signals corresponding to each subcarrier group shown in Fig. 22 are handled as one unit of processing, and N_{sub} subcarrier signals are input to each of the multipliers 326-1 to 326-j. Each of the multipliers 326-1 to 326-j multiplies the N_{sub} subcarrier signals by the code for carrying out the inverse spreading (which is the same code as the frequency spreading code and can be expressed as ±1) output from the frequency spreading code generator 325. The combiner 327 combines the received N_{sub} subcarrier signals after being inversely spread, and generates a frequency inversely spread signal corresponding to the subcarrier group signals as the result of the combining. The combiner 327 outputs the signal after the frequency is inversely spread, to the parallel-to-serial converter 310.

The parallel-to-serial converter 310 carries out a parallel-to-serial conversion on the received frequency inversely spread signal. The soft decision data preparing section 311 prepares soft decision data for each bit to the converted signal. The de-interleaver 312 de-interleaves the received soft decision data based on the rearrangement rule opposite to the interleave rule of the interleaver 192 at the transmission side. The Viterbi decoder 313 executes a Viterbi algorithm based on the soft decision data after the de-interleaving, and prepares error-corrected decoded data.

However, the above conventional mobile communication system has the following problems.

For example, in the multimedia mobile communications, the multicarrier CDMA transmitting apparatus changes a frequency spreading rate, a multi-code multiple number, a multivalue number of a modulation signal, and an encoding rate, according to a handled application and a state of a transmission line, thereby to adaptively change the information transmission speed. Therefore, when the information transmission speed is increased in the conventional mobile communication system that uses the convolutional code as the error correcting system, there has been a problem of characteristic degradation due to noise and interference signals and of reduction in throughput.

As a countermeasure against the characteristic degradation, the application of codes having high error correction capacity such as turbo codes is considered. However, in the conventional mobile communication system, since the waves are reflected, diffracted, and scattered according to the surrounding buildings and topography, the multi-path waves arrive at a mobile station through a plurality of transmission lines. These multi-path waves interfere with each other, and the frequency selective fading, being a random variation in the amplitude and the phase of the received wave, occurs. Particularly, when the mobile station is moving at a high speed, the variation due to the frequency selective fading becomes a high speed. Therefore, there has been a problem that even when the turbo codes are applied, it is hard to obtain soft decision data with high precision in order to sufficiently utilize the error correction capacity.

According to the conventional mobile communication system, when the information transmission speed is changed adaptively, a level variation in fading and shadowing or the like makes it impossible to estimate the state of the transmission line with high precision.

Therefore, it is an object of the present invention to provide a mobile communication system, a multicarrier CDMA transmitting apparatus, and a multicarrier CDMA receiving apparatus capable of estimating soft decision data with high precision and realizing higher throughput even when the turbo codes are used and the information transmission speed is changed adaptively.

It is another object of the present invention to provide a mobile communication system, a multicarrier CDMA transmitting apparatus, and a multicarrier CDMA receiving apparatus capable of estimating a state of a transmission line with high precision even when there is a level variation in fading and shadowing or the like.

### DISCLOSURE OF THE INVENTION

In a mobile communication system according to the present invention, a transmission side comprises a channel encoding unit (corresponding to a turbo encoder 1 in an embodiment described later) that carries out a channel encoding processing at a predetermined encoding rate, a modulating unit (201, 202) (corresponding to the subcarrier group modulation processors 202-1 to 202-n) that prepares slots for each subcarrier group each including a common pilot portion and a data portion based on channel-encoded transmission data and carries out a modulation processing on each subcarrier signal in the subcarrier group, and a transmitting unit (corresponding to the multiplexers 203-1 to 203-n, the inverse Fourier transformer 204, the GI adder 205, and the frequency converter 206) that carries out a predetermined processing on each subcarrier signal in the modulated subcarrier group to generate a signal, and transmits the generated signal to a transmission line. A reception side comprises a channel estimating/fading compensating unit (corresponding to the common pilot extractors 305-1 to 305-m, the subcarrier-by-subcarrier channel estimator 306, and the fading compensators 308-1 to 308-m) that carries out channel estimation and fading compensation based on a common pilot portion included in each subcarrier signal generated based on a predetermined reception processing, a signal amplitude estimating unit (corresponding to a channel estimate value-for-subcarrier-group averaging section 2) that estimates an amplitude of a signal in each result of the channel estimation, a demodulating/correcting unit (corresponding to the soft decision data preparing section 311) that carries out a soft decision processing on each subcarrier signal after the fading compensation and corrects the soft decision value by using the signal amplitude estimate value, and a channel decoding unit (corresponding to a turbo decoder 3) that carries out channel decoding on the corrected soft decision value according to the encoding rate.

In a mobile communication system according to the next invention, a transmission side comprises a channel encoding unit that carries out a channel encoding processing at a predetermined encoding rate, a modulating unit (201, 202) that prepares slots for each subcarrier group each including a common pilot portion, a known series portion known at a reception side, and a data portion based on the channel-encoded transmission data and carries out a modulation processing on each subcarrier signal in the subcarrier group, and a transmitting unit that carries out a predetermined processing on each subcarrier signal in the modulated subcarrier group and transmits the generated signal to a transmission line. The reception side comprises a channel estimating/fading compensating unit that carries out channel estimation and fading compensation based on a common pilot portion included in each subcarrier signal generated based on a predetermined reception processing, a soft decision correction value estimating unit (corresponding to a soft decision correction value-for-subcarrier-group estimator 5) that estimates a soft decision correction value by using the known series portion, a demodulating/correcting unit that carries out a soft decision processing on each subcarrier signal after the fading compensation, and corrects the soft decision value by using the soft decision correction value, and a channel decoding unit that carries out channel decoding on the corrected soft decision value according to the encoding rate.

In a mobile communication system according to the next invention, the soft decision correction value estimating unit estimates a signal amplitude of the known series portion as the soft decision correction value.

In a mobile communication system according to the next invention, the soft decision correction value estimating unit estimates a signal power to interference power ratio of the known series portion as the soft decision correction value.

In a mobile communication system according to the next invention, the soft decision correction value estimating unit estimates a signal amplitude and a signal power to interference power ratio of the known series portion, and sets as the soft decision correction value a product of the signal amplitude of the known series portion and a result of averaging the ratios of signal power to interference power.

In a mobile communication system according to the next invention, the channel decoding unit comprises a reliability information generating unit (corresponding to a reliability information preparing section 26) that generates reliability information for the decoded data, and the channel encoding unit carries out a channel encoding processing by adaptively changing the encoding rate according to the reliability information notified from the reception side.

In a mobile communication system according to the next invention, the channel decoding unit comprises a reliability information generating unit that generates reliability information for the decoded data, and the modulating unit carries out a modulation processing by adaptively changing the modulation multivalue number according to the reliability information notified from the reception side.

In a mobile communication system according to the next invention, the reliability information generating unit calculates an average signal power to average noise power ratio of the soft decision value as the reliability information.

In a mobile communication system according to the next invention, the reliability information generating unit calculates an average signal amplitude of a soft decision value as the reliability information.

In a mobile communication system according to the next invention, the reliability information generating unit calculates an average signal power of a soft decision value as the reliability information.

A mobile communication system according to the next invention employs turbo codes as error correction codes used for the channel encoding processing and the channel decoding processing.

A mobile communication system according to the next invention employs convolutional codes as error correction codes used for the channel encoding processing and the channel decoding processing.

A multicarrier CDMA transmitting apparatus according to the next invention comprises a turbo encoding unit that carries out a turbo encoding processing by adaptively changing an encoding rate according to reliability information notified from a reception side.

A multicarrier CDMA transmitting apparatus according to the next invention comprises a modulating unit that carries out a modulation processing by adaptively changing a modulation multivalue number according to reliability information notified from a reception side.

A multicarrier CDMA receiving apparatus according to the next invention comprises a channel estimating/fading compensating unit that carries out channel estimation and fading compensation based on a common pilot portion included in each subcarrier signal generated based on a predetermined reception processing, a signal amplitude estimating unit that estimates an amplitude of a signal in each result of the channel estimation, a demodulating/correcting unit that carries out a soft decision processing on each subcarrier signal after the fading compensation and corrects the soft decision value by using the signal amplitude estimate value, and a turbo decoding unit that carries out turbo decoding on the corrected soft decision value according to an encoding rate.

A multicarrier CDMA receiving apparatus according to the next invention comprises a channel estimating/fading compensating unit that carries out channel estimation and fading compensation based on a common pilot portion included in each subcarrier signal generated based on a predetermined reception processing, a soft decision correction value estimating unit that estimates a soft decision correction value by using a known series portion known at a reception side included in the subcarrier signal, a demodulating/correcting unit that carries out a soft decision processing on each subcarrier signal after the fading compensation and corrects the soft decision value by using the soft decision correction value, and a turbo decoding unit that carries out turbo decoding on the corrected soft decision value according to an encoding rate.

In a multicarrier CDMA receiving apparatus according to the next invention, the soft decision correction value estimating unit estimates a signal amplitude of the known series portion as the soft decision correction value.

In a multicarrier CDMA receiving apparatus according to the next invention, the soft decision correction value estimating unit estimates a signal power to interference power ratio of the known series portion as the soft decision correction value.

In a multicarrier CDMA receiving apparatus according to the next invention, the soft decision correction value estimating unit estimates a signal amplitude and a signal power to interference power ratio of the known series portion, and sets as the soft decision correction value a product of the signal amplitude of the known series portion and a result of averaging the ratios of signal power to interference power.

In a multicarrier CDMA receiving apparatus according to the next invention, the turbo decoding unit comprises a reliability information generating unit that calculates an average signal power to average noise power ratio of the soft decision value as the reliability information for the decoded data.

In a multicarrier CDMA receiving apparatus according to the next invention, the turbo decoding unit comprises a reliability information generating unit that calculates an average signal amplitude of the soft decision value as the reliability information for the decoded data.

In a multicarrier CDMA receiving apparatus according to the next invention, the turbo decoding unit comprises a reliability information generating unit that calculates an average signal power of the soft decision value as the reliability information for the decoded data.

### BRIEF DESCRIPTION OF THE DRAWINGS

Fig. 1 shows a configuration of a multicarrier CDMA transmitting apparatus according to a first embodiment of the present invention; Fig. 2 shows a configuration of a multicarrier CDMA receiving apparatus according to the first embodiment of the present invention; Fig. 3 shows a configuration of a turbo encoder; Fig. 4 shows a configuration of a turbo decoder; Fig. 5 shows a configuration of a reliability information preparing section; Fig. 6 shows a relationship between reliability information and a packet error rate, and a relationship between an encoding rate, an information transmission speed, and a packet error rate characteristic; Fig. 7 shows a configuration of an information modulator; Fig. 8 shows a structure of slots prepared by slot preparing sections according to a second embodiment; Fig. 9 shows a configuration of a multicarrier CDMA receiving apparatus according to the second embodiment of the present invention; Fig. 10 shows a configuration of a soft decision correction value-for-subcarrier-group estimator according to the second embodiment; Fig. 11 shows a configuration of a soft decision correction value-for-subcarrier-group estimator according to a third embodiment; Fig. 12 shows a configuration of a soft decision correction value-for-subcarrier-group estimator according to a fourth embodiment; Fig. 13 shows a configuration of an SIR averaging section; Fig. 14 shows a configuration of a conventional multicarrier CDMA transmitting apparatus; Fig. 15 shows a configuration of a conventional multicarrier CDMA receiving apparatus; Fig. 16 shows a frame format for each subcarrier; Fig. 17 shows a configuration of a copying section; Fig. 18 shows a configuration of an information modulator; Fig. 19 shows a configuration of a frequency spreading section; Fig. 20 shows how to add guard intervals; Fig. 21 shows one example of an impulse response of a frequency selective fading transmission line; Fig. 22 shows modulation signals on the frequency axis when N_{scg} is equal to four and also when N_{sub} is equal to eight; Fig. 23 shows a configuration of a fading compensator; and Fig. 24 shows a configuration of a frequency inversely spreading section.

### BEST MODE FOR CARRYING OUT THE INVENTION

Embodiments of the mobile communication system, the multicarrier CDMA transmitting apparatus, and the multicarrier CDMA receiving apparatus according to the present invention will be explained below with reference to the accompanying drawings. It is noted that the present invention is not limited by these embodiments.

### First Embodiment:

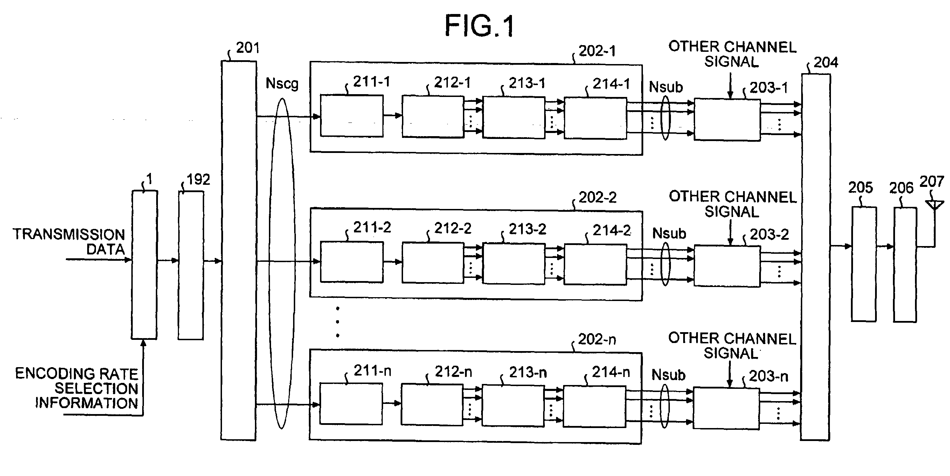

Fig. 1 shows a configuration of a multicarrier CDMA transmitting apparatus according to a first embodiment of the present invention. In Fig. 1, 1 denotes a turbo encoder, 192 denotes the interleaver, 201 denotes the serial-to-parallel converter (S/P), 202-1, 202-2, ..., and 202-n denote the first, second, ..., and the N_{scg} (= n)-th subcarrier group modulation processors respectively, 203-1, 203-2, ..., and 203-n denote the multiplexers respectively, 204 denotes the inverse Fourier transformer, 205 denotes the guard interval (GI) adder, 206 denotes the frequency converter, and 207 denotes the antenna. In each subcarrier group modulation processor, 211-1, 211-2, ..., and 211-n denote the slot generators respectively, 212-1, 212-2, ..., and 212-n denote the copying sections respectively, 213-1, 213-2, ..., 213-n denote the information modulators respectively, and 214-1, 214-2, ..., and 214-n denote the frequency spreading sections respectively.

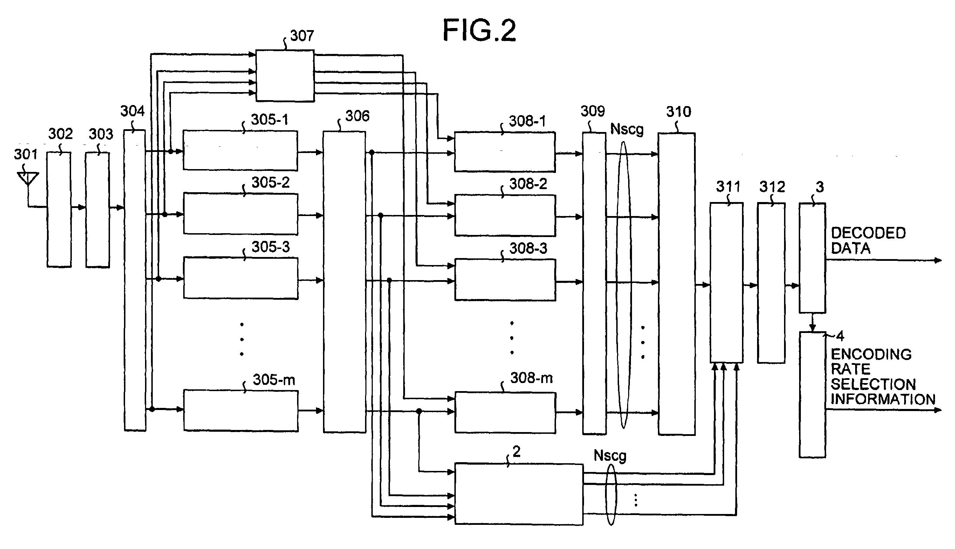

Fig. 2 shows a configuration of a multicarrier CDMA receiving apparatus according to the first embodiment of the present invention. In Fig. 2, 301 denotes the antenna, 302 denotes the frequency converter, 303 denotes the guard interval (GI) remover, 304 denotes the Fourier transformer, 305-1, 305-2, 305-3, ..., and 305-m denote the common pilot extractors respectively, 306 denotes the subcarrier-by-subcarrier channel estimator, 307 denotes the delay unit, 308-1, 308-2, 308-3, ..., and 308-m denote the fading compensators respectively, 309 denotes the frequency inversely spreading section, 310 denotes the parallel-to-serial converter (P/S), 2 denotes a channel estimate value-for-subcarrier-group averaging section, 311 denotes the soft decision data preparing section, 312 denotes the de-interleaver, 3 denotes a turbo decoder, and 4 denotes a encoding rate selector.

The operation of the multicarrier CDMA transmitting and receiving apparatuses in the mobile communication system according to the present embodiment will be explained. It is assumed that data transmission and reception is performed between a base station and a plurality of terminals.

The operation of the multicarrier CDMA transmitting apparatus will be explained. Transmission data to be transmitted to an optional terminal is input to the turbo encoder 1. The turbo encoder 1 carries out a turbo encoding to correct errors in the transmission data. The turbo encoder 1 determines an encoding rate based on encoding rate selection information notified from the multicarrier CDMA receiving apparatus (notified through an up link), and carries out the encoding at this encoding rate. Turbo codes have higher error correction capacity as compared to convolutional codes. Particularly, even when the modulation multivalue number or the multi-code multiple number is increased to raise the information transmission speed thereby to increase the number of bits in one slot, it becomes possible to more increase the error correction capacity based on the increased code word length. The turbo codes are described in detail in the literature of "Near Shannon limit error-correcting coding and decoding: turbo codes (1), in Proc. IEEE Int. Conf. on Communications, pp. 1064-1070, May, 1993".

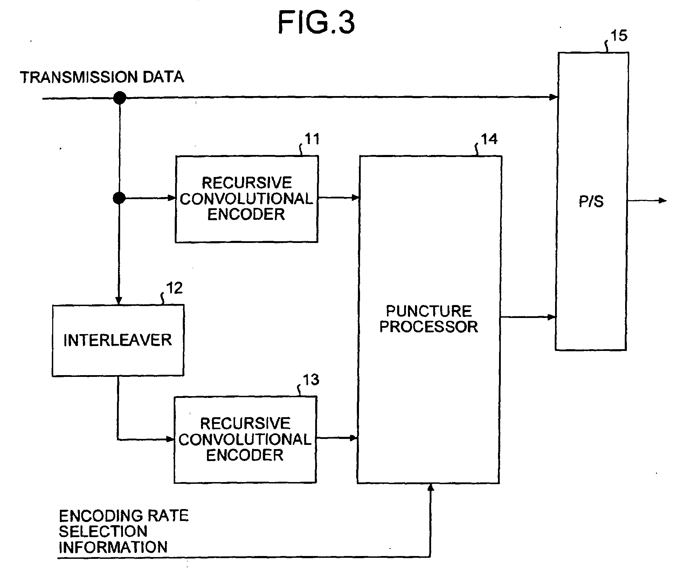

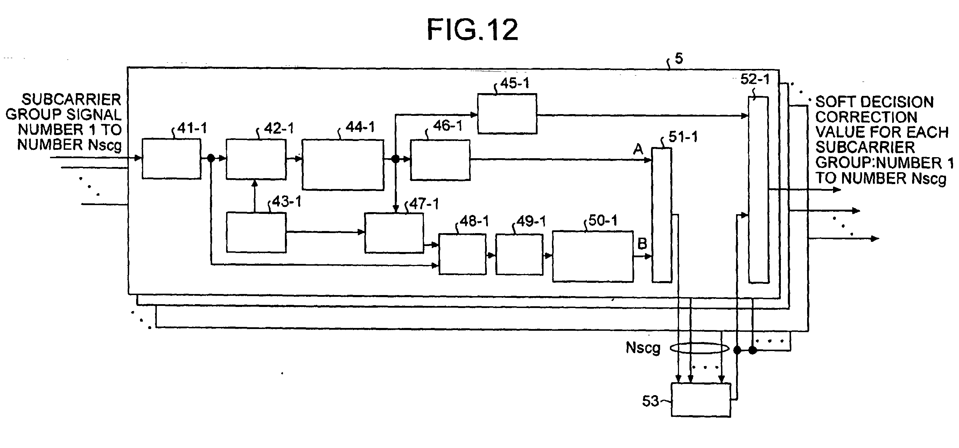

Fig. 3 shows a configuration of the turbo encoder 1. In Fig. 3, 12 denotes an interleaver, 11 and 13 denote recursive convolutional encoders, 14 denotes a puncture processor, and 15 denotes a parallel-to-serial converter (P/S). The recursive convolutional encoder 11 carries out a recursive convolutional processing on the transmission data, thereby to prepare parity data. The interleaver 12 interleaves the transmission data in one code word unit.

The one code word unit is one slot or one frame unit. When information is transmitted to an optional terminal in multi-code multiple transmission using a plurality of frequency spreading codes, transmission data in one slot or one frame unit allocated to each of the frequency spreading codes may be collectively used as one code word unit. With this arrangement, it is possible to prolong the interleave length of the interleaver 12, and it becomes possible to increase the code error correction capacity.

The recursive convolutional encoder 13 carries out a recursive convolutional processing on the interleaved transmission data, thereby to prepare parity data. The puncture processor 14 thins out the parity data according to the determined encoding rate, and outputs the thinned-out parity data to the parallel-to-serial converter 15. The parallel-to-serial converter 15 carries out a parallel-to-serial conversion on the transmission data and the thinned-out parity data, and outputs the converted result to the interleaver 192 as the turbo encoding data.

The turbo-encoded data is input to the interleaver 192, which interleaves the data to resolve the burst error that occurs in the frequency selective fading transmission line. The interleaved data is input to the serial-to-parallel converter 201, which converts the data into parallel data so that the parallel number of the data becomes N_{scg} (a predetermined integer). Respective pieces of the parallel data reach the subcarrier group modulation processors 202-1 to 202-n, respectively. Each of the first to the N_{scg} -th subcarrier group modulation processors that performs modulation processing in a subcarrier group unit, carries out the same signal processing. Therefore, the operation of the first subcarrier group modulation processor 202-1 will be explained here, and the explanation of the operation of the rest of the subcarrier group modulation processors will be omitted.

Of the parallel data output from the serial-to-parallel converter 201, the first data series is input to the subcarrier group modulation processor 202-1. The slot generator 211-1 divides the received data series into units of N_{data}, and adds a common pilot symbol to each header of the divided data, thereby to prepare one data slot and further a frame of N slots (refer to Fig. 16).

The copying section 212-1 receives the data slot of the first subcarrier group, copies the frame by a predetermined number of subcarriers N_{sub} (= j), and prepares the data slots of the N_{sub} subcarriers. The configuration of each copying section is similar to that explained in Fig. 17. The copying section 212-1 outputs the N_{sub} data slots to the information modulator 213-1.

The information modulator 213-1 receives the N_{sub} data slots, and carries out QPSK modulation on the data slots with the QPSK modulators 221-1 to 221-j respectively, and prepares N_{sub} information-modulated subcarrier signals. The configuration of each information modulator is similar to that explained in Fig. 18. The information modulator 213-1 outputs the N_{sub} information-modulated subcarrier signals to the frequency spreading section 214-1.

The frequency spreading section 214-1 spreads the frequency of the N_{sub} information-modulated subcarrier signals respectively by using mutually orthogonal frequency spreading codes (which are expressed as ±1) that are given in advance to units of plural terminals or other transmission channel units. The configuration of each frequency spreading section is similar to that explained in Fig. 19. More specifically, the frequency spreading section 214-1 multiplies the N_{sub} information-modulated subcarrier signals by each frequency spreading code output from the frequency spreading code generator 222. For the frequency spreading codes, Walsch codes as orthogonal codes are generally used. The frequency spreading section 214-1 outputs the N_{sub} frequency-spread subcarrier signals to the multiplexer 203-1.

The multiplexer 203-1 receives the N_{sub} frequency-spread subcarrier signals, multiplexes these subcarrier signals (transmission signals to be transmitted to the terminals), and outputs the multiplexed subcarrier signals to the inverse Fourier transformer 204. At this time, the inverse Fourier transformer 204 also receives the multiplexed subcarrier signals obtained from the multiplexers 203-2 to 203-n in addition to the input from the multiplexer 203-1, that is, the inputs of the N_{scg} × N_{sub} (= N_{c}) subcarrier signals in total.

The inverse Fourier transformer 204 carries out an inverse Fourier transformation processing on the received subcarrier signals, and outputs the inverse Fourier-transformed signals to the guard interval adder 205.

The guard interval adder 205 copies the latter portions of the symbols of the inverse Fourier-transformed signals corresponding to a time τ_{GI}, and pastes these portions to the headers of the symbols (refer to Fig. 20). The guard interval adder 205 outputs the guard interval-added signals to the frequency converter 206. In general, τ_{GI} is set larger than the spread of delay waves on the transmission line (refer to Fig. 21).

Last, the frequency converter 206 carries out a predetermined frequency conversion processing on the received guard interval-added signals, and outputs the frequency-converted signals to transmission lines for radio communication via the antenna 207.

The operation of the multicarrier CDMA receiving apparatus will be explained next with reference to Fig. 2. The frequency converter 302 receives, via the antenna 301, the signals influenced by the frequency selective fading on the radio communication lines, and converts these signals into base band signals. The frequency converter 302 outputs the base band signals to the guard interval remover 303.

The guard interval remover 303 removes the guard intervals (GI) from the received base band signals, and generates continuous signals of each symbol (refer to the upper portion in Fig. 20). The guard interval remover 303 outputs the generated signals to the Fourier transformer 304.

The Fourier transformer 304 carries out a Fourier transformation processing on the received signals, and generates N_{scg} × N_{sub} (= N_{c}) subcarrier signals. The Fourier transformer 304 outputs corresponding one of the subcarrier signals for each subcarrier to the delay unit 307 and the common pilot extractor 305-1 to 305-m respectively.

The common pilot extractor 305-1 to 305-m extract common pilot portions from the received subcarrier signals respectively. The subcarrier-by-subcarrier channel estimator 306 calculates a channel estimate value for each subcarrier based on the signal of the extracted common pilot portion. At this time, the subcarrier-by-subcarrier channel estimator 306 may add in-phase channel estimate values of adjacent three subcarriers, thereby to calculate a channel estimate value for each subcarrier after suppressing noise component. The subcarrier-by-subcarrier channel estimator 306 may also calculate channel estimate values based on the common pilot portions at the slot front part and the slot back part (refer to Fig. 16). In this case, two channel estimate values are calculated for each subcarrier. The subcarrier-by-subcarrier channel estimator 306 outputs the channel estimate value for each subcarrier to the fading compensators 308-1 to 308-m and the channel estimate value-for-subcarrier-group averaging section 2.

On the other hand, the delay unit 307 receives each Fourier-transformed subcarrier signal, and delays each signal to adjust delays due to the processing in the common pilot extractor 305-1 to 305-m and the processing in the subcarrier-by-subcarrier channel estimator 306. The delay unit 307 outputs the respective delayed subcarrier signals to the fading compensators 308-1 to 308-m for each subcarrier.

The fading compensators 308-1 to 308-m carry out fading compensation for subcarrier signals for each subcarrier based on the received channel estimate values for each subcarrier, and output the fading-compensated subcarrier signals to the frequency inversely spreading section 309. The configuration of each fading compensator is similar to that explained in Fig. 23. More specifically, the absolute value calculator 322 receives the channel estimate value for each subcarrier, and calculates an absolute value of this estimate value. The divider 323 divides the received channel estimate value for each subcarrier by the calculated absolute value. The complex conjugate calculator 324 receives the result of the division, and calculates a complex conjugate value of the result of the division. The multiplier 321 multiplies the received subcarrier signal by the calculated complex conjugate value, and outputs the fading-compensated subcarrier signal for each subcarrier to the frequency inversely spreading section 309 as the result of the multiplication.

The frequency inversely spreading section 309 handles the N_{sub} subcarrier signals corresponding to each subcarrier group as one unit of processing. Each of the multipliers 326-1 to 326-j receives the N_{sub} subcarrier signals, and multiplies the N_{sub} subcarrier signals by the code for carrying out the inverse spreading (which is the same code as the frequency spreading code and can be expressed as ±1) output from the frequency spreading code generator 325. The combiner 327 combines the received inversely spread N_{sub} subcarrier signals, and generates a frequency inversely spread signal corresponding to the subcarrier group signal as the result of the combining. The combiner 327 outputs the frequency inversely spread signal to the parallel-to-serial converter 310. The configuration of the frequency inversely spreading section 309 is similar to that explained in Fig. 24.

The parallel-to-serial converter 310 performs a parallel-to-serial conversion on the received frequency inversely spread signal, and outputs the converted signal to the soft decision data preparing section 311.

On the other hand, the channel estimate value-for-subcarrier-group averaging section 2 receives the channel estimate value for each subcarrier, and calculates the amplitude of the channel estimate value for each subcarrier group. More specifically, the channel estimate value-for-subcarrier-group averaging section 2 calculates the amplitudes (in absolute values) of the channel estimate values from the channel estimate values of the N_{sub} subcarrier signals corresponding to the subcarrier group, averages these amplitudes of the N_{sub} channel estimate values to generate a channel estimate value (only the amplitude component) for each subcarrier group, and outputs the channel estimate value for each subcarrier group to the soft decision data preparing section 311. When receiving the two channel estimate values estimated based on the common pilot portions at the slot front part and the slot back part, the channel estimate value-for-subcarrier-group averaging section 2 averages these two values, thereby to more increase the precision. More specifically, the channel estimate value-for-subcarrier-group averaging section 2 calculates the amplitudes (in absolute values) of the channel estimate values from the two channel estimate values of the N_{sub} subcarrier signals corresponding to the subcarrier group, averages the amplitudes of the 2 × N_{sub} channel estimate values to generate a channel estimate value (only the amplitude component) for each subcarrier group, and outputs the channel estimate value for each subcarrier group to the soft decision data preparing section 311.

The soft decision data preparing section 311 generates soft decision data for each bit (hereinafter referred to as provisional soft decision data) based on the received signal after the parallel-to-serial conversion. For example, in the QPSK modulation, the real part (the in-phase component) and the imaginary part (the quadrature component) of the signal after the parallel-to-serial conversion as the complex symbol signal are set as provisional soft decision data for each bit. Next, the soft decision data preparing section 311 corrects the provisional soft decision data based on the channel estimate value (only the amplitude component) for each subcarrier group, and prepares soft decision data for each bit with higher precision. More specifically, the soft decision data preparing section 311 multiplies the provisional soft decision data for each bit by the channel estimate value (only the amplitude component) for each subcarrier group corresponding to the bit-transmitted subcarrier group. The soft decision data preparing section 311 outputs the signal after the multiplication to the de-interleaver 312 as the soft decision data for each bit.

The de-interleaver 312 de-interleaves the received soft decision data based on the rearrangement rule opposite to the interleave rule of the interleaver 192 at the transmitting apparatus.

The turbo decoder 3 executes the turbo decoding based on the de-interleaved soft decision data, and prepares the error-corrected decoded data. The turbo decoder 3 prepares reliability information that shows the reliability of the decoded data, and outputs the reliability information to the encoding rate selector 4.

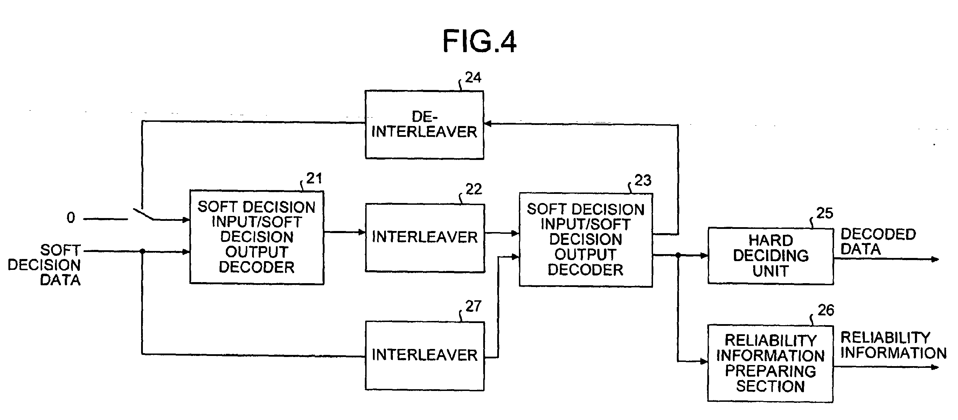

Fig. 4 shows a configuration of the turbo decoder 3. In Fig. 4, 21 and 23 denote soft decision input/soft decision output decoders, 22 denotes an interleaver, 24 denotes a de-interleaver, 25 denotes a hard deciding unit, and 26 denotes a reliability information preparing section.

The soft decision input/soft decision output decoder 21 carries out a soft decision input/soft decision output decoding processing corresponding to the recursive convolutional encoder 11 by using the received soft decision data for each bit and the signal output from the de-interleaver 24. At the first decoding processing time, the soft decision input/soft decision output decoder 21 inputs zero without using the signal output from the de-interleaver 24. In the soft decision input/soft decision output decoding processing, a MAP decoding, a Max-Log-MAP decoding, or an SOVA (Soft Output Viterbi Algorithm) decoding may be used. The interleaver 22 and an interleaver 27 rearrange the output signals from the soft decision input/soft decision output decoder 21 according to a rearrangement rule similar to that of the interleaver 12 shown in Fig. 3. The soft decision input/soft decision output decoder 23 carries out a soft decision input/soft decision output decoding processing corresponding to the recursive convolutional encoder 13 by using the soft decision data for each bit received through the interleaver 27and the output signal from the interleaver 22. The de-interleaver 24 rearranges the output signals from the soft decision input/soft decision output decoder 23 based on a rearrangement rule opposite to that of the interleaver 12. The de-interleaved signals are used again to decode the soft decision input/soft decision output signals in the soft decision input/soft decision output decoder 21. This series of processing is carried out repeatedly. After the processing is carried out repeatedly by a preset number of times, the hard deciding unit 25 carries out a hard decision on the decoded soft decision value output from the soft decision input/soft decision output decoder 23, and prepares error-corrected decoded data.

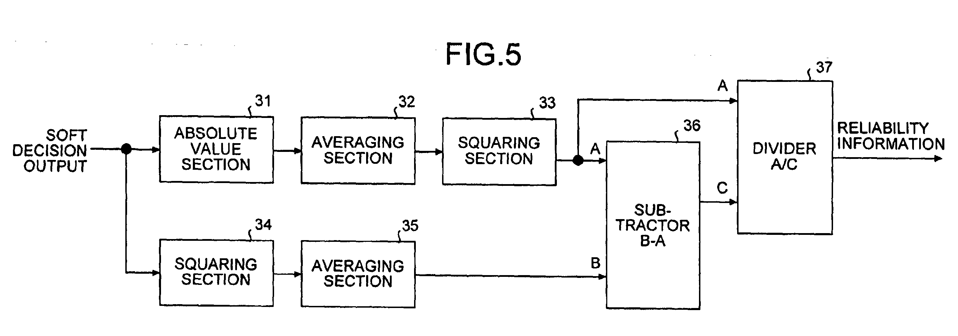

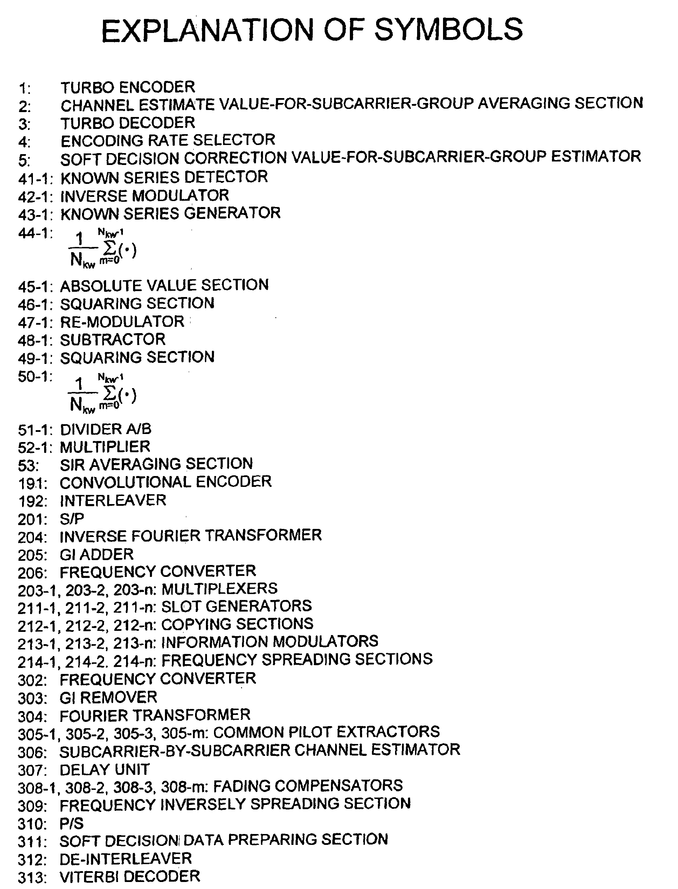

The reliability information preparing section 26 prepares reliability information per one bit of the decoded data. Fig. 5 shows a configuration of the reliability information preparing section 26. In Fig. 5, 31 denotes an absolute value section, 32 and 35 denote averaging sections, 33 and 34 denote squaring sections, 36 denotes a subtractor, and 37 denotes a divider.

The absolute value section 31 calculates absolute values of received soft decision values. The averaging section 32 cumulatively adds the absolute values over the one code word portion (over one slot or over one frame), divides the added result by the number of bits of the decoded data for one code word, thereby to obtain an average value, and outputs this average value to the squaring section 33. The squaring section 33 squares the received average value, thereby to obtain an average signal power of the soft decision value (as expressed by A in Fig. 5), and outputs the average signal power to the subtractor 36 and the divider 37 respectively. On the other hand, the squaring section 34 squares the received soft decision value. The averaging section 35 cumulatively adds the squared values over the one code word portion (over one slot or over one frame), divides the added result by the number of bits of the decoded data for one code word, thereby to obtain an average value (as expressed by B in Fig. 5), and outputs the average value to the subtractor 36. The subtractor 36 subtracts A from B, thereby to obtain an average noise power of the soft decision value (as expressed by C in Fig. 5), and outputs this average noise power to the divider 37. The divider divides A by C, thereby to obtain an average signal power to average noise power ratio of the soft decision value, and outputs this ratio as the reliability information.

The calculation method may be simplified such that the output from the averaging section 32 (the average signal amplitude of the soft decision value) or the output from the squaring section 33 (the average signal power of the soft decision value) may be used as the reliability information. When the transmitting apparatus carries out multi-code multiple transmission to an optional terminal by using a plurality of frequency spreading codes, the receiving apparatus collects the transmission data per one slot or per one frame allocated for each frequency spreading codes, and decodes the collective transmission data as one code word. It is possible to increase the estimate precision of the reliability information by averaging this information over a plurality of frames or a plurality of slots.

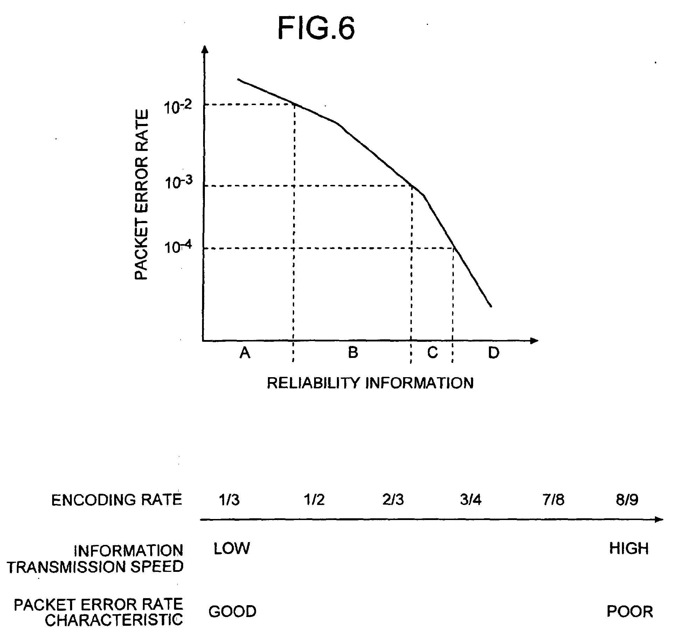

The encoding rate selector 4 determines an encoding rate to be notified to the transmitting apparatus based on the received reliability information. Fig. 6 shows a relationship between the reliability information and the packet error rate, and a relationship between the encoding rate, the information transmission speed, and the packet error rate characteristic. More specifically, the upper portion of Fig. 6 shows probabilities that "packets that have errors of at least one bit in decoded data" exist in "the whole transmission packets", as the relationship between the reliability information and the packet error rate, where one frame or one slot is defined as one packet. In other words, when the state of a transmission line is poor and also when the packet error rate is high, the reliability information becomes less reliable. On the other hand, when the state of a transmission line is good and also when the packet error rate is low, the reliability information becomes highly reliable. For example, when a packet error rate of not higher than 10⁻² is permitted by assuming that retransmission is carried out in the mobile communication system, a throughput as high as possible is realized by selecting a maximum coding rate at which the packet error rate becomes not higher than 10⁻².

The lower portion of Fig. 6 shows a relationship between selection candidates of the encoding rate, the information transmission speed, and the packet error rate characteristic. When the encoding rate is smaller, the packet error rate characteristic becomes better (the packet error rate becomes lower), but the information transmission speed becomes lower. When the encoding rate is higher, the packet error rate characteristic becomes worse (the packet error rate becomes higher), but the information transmission speed becomes higher. For example, when the received reliability information exists in the region A in the upper portion of Fig. 6, the encoding rate selector 4 selects an encoding rate by one stage lower than the encoding rate selected at present (for example, selects 1/2 when the current encoding rate is 2/3), thereby to control the packet error rate at a low level. When the reliability information is in the region B or C in the upper portion of Fig. 6, the encoding rate selector 4 selects the currently selected encoding rate as it is, thereby to control to maintain the packet error rate. When the reliability information is in the region D in the upper portion of Fig. 6, the encoding rate selector 4 selects the encoding rate that is one stage higher than the encoding rate selected at present (for example, selects 3/4 when the current encoding rate is 2/3), thereby to control to increase the information transmission speed.

As explained above, according to the present embodiment, the channel estimate value is calculated for each subcarrier by using the signal of the common pilot portion. Further, the amplitude components (in absolute values) of the channel estimate values are averaged for each subcarrier group. The soft decision data for each bit is corrected by using the averaged amplitude component of the channel estimate value, and the turbo decoding is carried out thereafter. This makes it possible to generate high-precision soft decision data, and therefore it is possible to obtain decoded data with small error. Therefore, it is possible to realize high throughput even when the turbo codes are used and the information transmission speed is changed adaptively.

According to the mobile communication system of the present embodiment, the receiving apparatus selects the encoding rate based on the reliability information for the decoded data, and notifies the transmitting apparatus of the encoding rate through the up link. The transmitting apparatus carries out the encoding processing by using the notified encoding rate. Therefore, it is possible to realize high throughput while maintaining predetermined transmission quality. The receiving apparatus does not need to estimate parameters of complex transmission lines such as the signal power to interference power ratio or the delay spread on the transmission line.

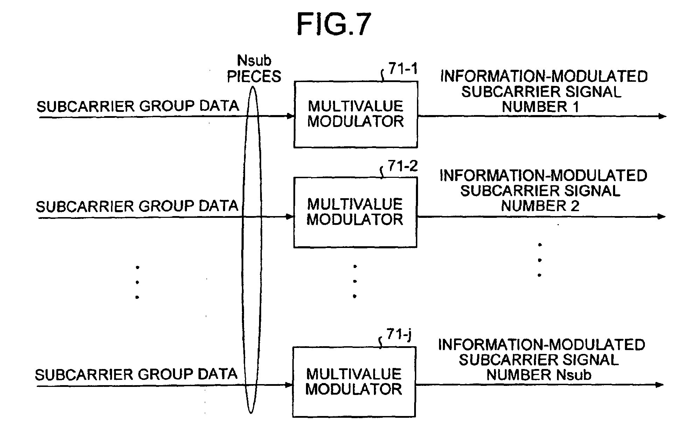

While the encoding rate is changed based on the reliability information for the decoded data in the present embodiment, it is also possible to change similarly the multivalue number of the modulation signal, the frequency spreading rate, and the multi-code multiple number. However, when the multivalue number of the modulation signal is changed, the configuration of the information modulators 213-1 to 213-n becomes as shown in Fig. 7. Fig. 7 shows another configuration of the information modulators 213-1 to 213-n, where 71-1, 71-2, ..., and 71-j denote multivalue modulators. The multivalue modulators 71-1 to 71-j carry out a multivalue modulation such as 8 PSK modulation and 16 QAM modulation.

When the frequency spreading rate and the multi-code multiple number are changed, the transmitting apparatus (the base station) needs to consider the reception quality of other users. In this case, the receiving apparatus directly notifies the transmitting apparatus of the reliability information. The transmitting apparatus determines the frequency spreading rate and the multi-code multiple number of each user, by taking into account the reliability information of all users.

While the encoding rate of the turbo codes is changed in the present embodiment, the change is not limited to this, and it is also possible change the encoding rate of the convolutional code (or the multivalue number of the modulation signal, the frequency spreading rate, or the multi-code multiple number). In this case, for the reliability information for the decoded data, it is possible to use a cumulatively added value of a path-metric value of a maximum likelihood path obtained at each time based on the Viterbi decoding (where all the path-metrics are normalized at each time by using this path-metric value).

### Second Embodiment:

In a mobile communication system of a second embodiment, the method of slot preparation by the slot preparing sections 211-1 to 211-n in the transmitting apparatus and the configuration of the receiving apparatus are different from those of the first embodiment. Only the portions of the operation of the system that are different from those of the first embodiment will be explained below. The configuration of the transmitting apparatus according to the present embodiment is similar to the configuration shown in Fig. 1.

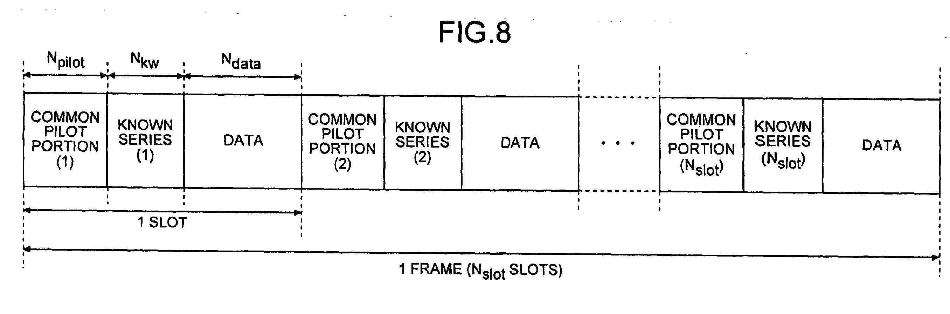

Fig. 8 shows a structure of slots prepared by the slot preparing sections 211-1 to 211-n according to the second embodiment. The slot preparing sections 211-1 to 211-n divide the received data series into units of N_{data}, and add a common pilot symbol and a known series (a series which the receiving apparatus already knows as well) to each header of the divided data, thereby to prepare one data slot and further a frame of N slots.

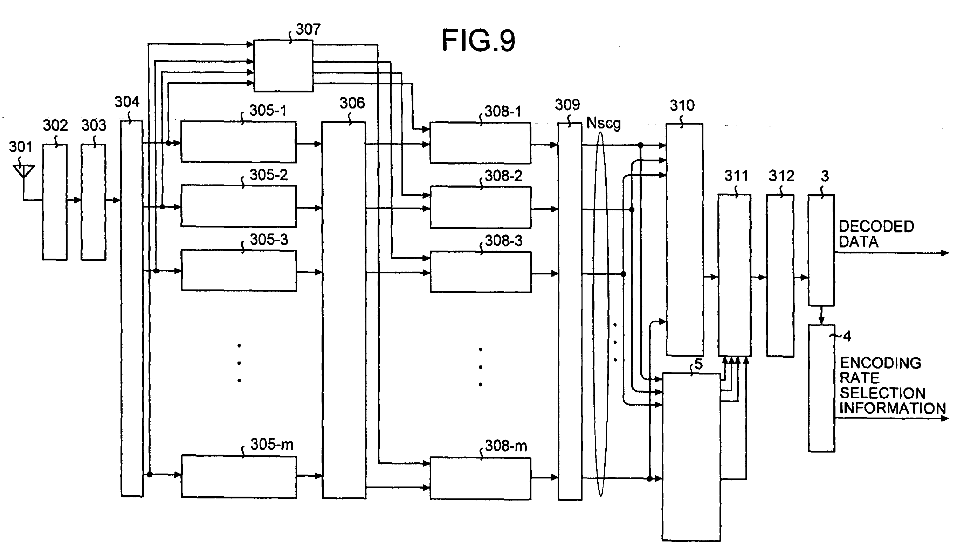

Fig. 9 shows a configuration of a multicarrier CDMA receiving apparatus according to the second embodiment of the present invention. In Fig. 9, 5 denotes a soft decision correction value-for-subcarrier-group estimator. The structures similar to those of the first embodiment are attached with like reference numerals, and their explanation will be omitted.

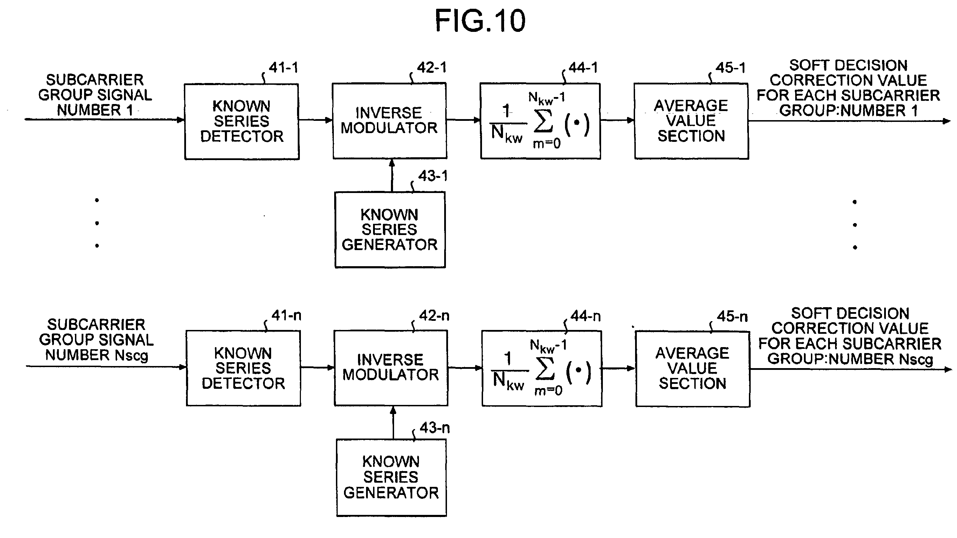

Fig. 10 shows a configuration of the soft decision correction value-for-subcarrier-group estimator 5. In Fig. 10, 41-1 to 41-n denote known series detectors, 42-1 to 42-n denote inverse modulators, 43-1 to 43-n denote known series generators, 44-1 to 44-n denote averaging sections, and 45-1 to 45-n denote absolute value sections. The soft decision correction value-for-subcarrier-group estimator 5 carries out the same operation on each subcarrier group. Therefore, particularly, the operation performed on the subcarrier group signal number 1 will be explained here.

The known series detector 41-1 detects the known series shown in Fig. 8 from among the received subcarrier group signal after the frequency is inversely spread. The inverse modulator 42-1 receives the detected known series portion, and removes the modulation component by utilizing the known series that is generated by the known series generator 43-1 and is known by the receiving apparatus in advance. The averaging section 44-1 receives the known series portion after the removal of the modulation component, and carries out an in-phase average processing by using the symbols of N_{kw} known series portions, thereby to suppress the noise component. The absolute value section 45-1 receives the known series portion after the average processing, and calculates an absolute value of the known series portion, thereby to obtain the signal amplitude of the known series portion. The absolute value section 45-1 outputs the signal amplitude of the known series portion to the soft decision data preparing section 311 as the soft decision correction value of the subcarrier group signal number 1.

The soft decision data preparing section 311 generates soft decision data for each bit (hereinafter referred to as provisional soft decision data) based on the received signal after the parallel-to-serial conversion. For example, in the QPSK modulation, the real part (the in-phase component) and the imaginary part (the quadrature component) of the signal after the parallel-to-serial conversion as the complex symbol signal are set as provisional soft decision data for each bit. Next, the soft decision data preparing section 311 corrects the provisional soft decision data based on the received soft decision correction value for each subcarrier group, and prepares the soft decision data for each bit with higher precision. More specifically, the soft decision data preparing section 311 multiplies the provisional soft decision data for each bit by the soft decision correction value for each subcarrier group corresponding to the bit-transmitted subcarrier group. The soft decision data preparing section 311 then outputs the signal after the multiplication to the de-interleaver 312 as the soft decision data for each bit.

As explained above, according to the present embodiment, the soft decision correction value is calculated for each subcarrier group by using the signal of the known series portion. Further, the soft decision data for each bit is corrected by using the soft decision correction value, and the turbo decoding is carried out thereafter. This makes it possible to generate high-precision soft decision data, and it is possible to obtain decoded data with small error. Therefore, it is possible to realize high throughput like in the first embodiment even when the turbo codes are used and the information transmission speed is changed adaptively.

According to the present embodiment, it is possible to more increase the estimate precision by averaging the soft decision correction values, that is, the signal amplitudes of the known series portions, over a plurality of slots. While the known series is disposed after the common pilot symbol in the present embodiment, it is not always necessary to dispose the known series after the common pilot symbol, and it is possible to dispose the known series at the center portion of the slot or at the end of the slot.

### Third Embodiment:

In a mobile communication system of a third embodiment, the configuration of the soft decision correction value-for-subcarrier-group estimator 5 within the receiving apparatus is different from that of the second embodiment. Only the portions of the operation of the system that are different from those of the second embodiment will be explained below. The configuration of the transmitting apparatus according to the present embodiment is similar to the configuration shown in Fig. 1, and the configuration of the receiving apparatus according to the present embodiment is similar to the configuration shown in Fig. 9.

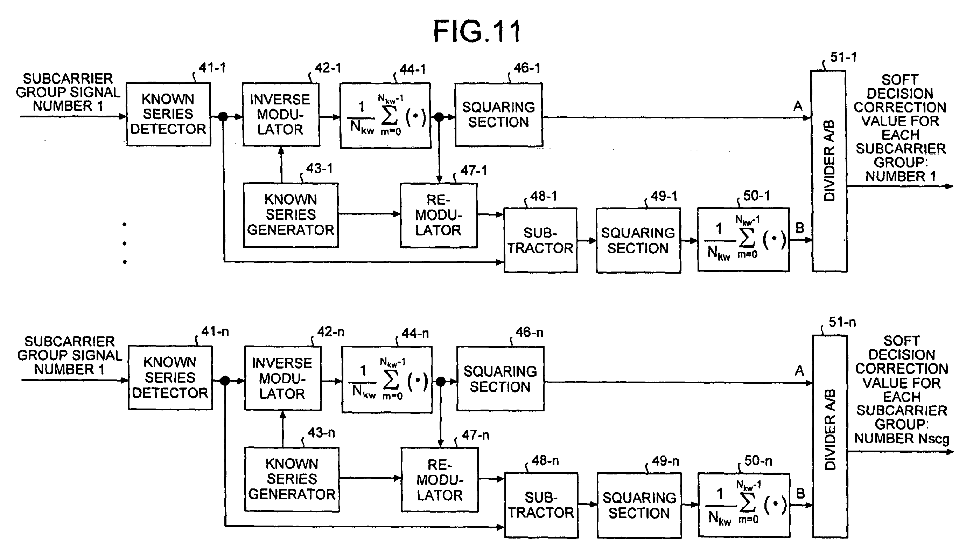

Fig. 11 shows a configuration of the soft decision correction value-for-subcarrier-group estimator 5 according to the third embodiment. In Fig. 11, 46-1 to 46-n denote squaring sections, 47-1 to 47-n denote re-modulators, 48-1 to 48-n denote subtractors, 49-1 to 49-n denote squaring sections, 50-1 to 50-n denote averaging sections, and 51-1 to 51-n denote dividers. The components similar to those shown in Fig. 10 are attached with like reference numerals, and their explanation will be omitted. The soft decision correction value-for-subcarrier-group estimator 5 carries out the same operation on each subcarrier group. Therefore, particularly, the operation carried out to the subcarrier group signal number 1 will be explained here.

The squaring section 46-1 receives the known series portion after the average processing from the averaging section 44-1, and squares the known series portion.

On the other hand, the re-modulator 47-1 receives the known series that is generated by the known series generator 43-1 and is known by the receiving apparatus in advance, and the known series portion after the average processing output from the averaging section 44-1. The re-modulator 47-1 carries out the modulation processing again by using these signals. In the present embodiment, the transmitting apparatus shown in Fig. 1 carries out the QPSK modulation as the information modulation. Therefore, the re-modulator 47-1 carries out the QPSK modulation again.

Next, the subtractor 48-1 subtracts the re-modulated signal from the known series portion detected by the known series detector 41-1. The subtractor 48-1 subtracts the signal by the number of N_{kw} that corresponds to the number of known symbols, for each symbol. The squaring section 49-1 squares the subtracted result for the number of the N_{kw} symbols. The averaging section 50-1 averages the received squared results, thereby to obtain an average interference power of the N_{kw} symbols. Last, the divider 51-1 divides the calculation result of the squaring section 46-1 by the calculation result of the averaging section 50-1, thereby to obtain a signal power to interference power ratio. The divider 51-1 outputs this signal power to interference power ratio to the soft decision data preparing section 311 as the soft decision correction value of the subcarrier group signal number 1.

As explained above, according to the present embodiment, the signal power to interference power ratio for each subcarrier group is calculated as the soft decision correction value by using the signal of the known series portion. Further, the soft decision data for each bit is corrected by using the soft decision correction value, and the turbo decoding is carried out thereafter. This makes it possible to generate high-precision soft decision data, and it is possible to obtain decoded data with small error. Therefore, it is possible to realize high throughput like in the first or the second embodiments even when the turbo codes are used and the information transmission speed is changed adaptively.

According to the present embodiment, it is possible to more increase the estimate precision by averaging the soft decision correction values, that is, the signal power to interference power ratio, over a plurality of slots.

### Fourth Embodiment:

In a mobile communication system of a fourth embodiment, the configuration of the soft decision correction value-for-subcarrier-group estimator 5 within the receiving apparatus is different from that of the second or the third embodiment. Only the portions of the operation of the system that are different from those of the second and the third embodiments will be explained below. The configuration of the transmitting apparatus according to the present embodiment is similar to the configuration shown in Fig. 1, and the configuration of the receiving apparatus according to the present embodiment is similar to the configuration shown in Fig. 9.

Fig. 12 shows a configuration of the soft decision correction value-for-subcarrier-group estimator 5 according to the fourth embodiment. In Fig. 12, 52-1 to 52-n denote multipliers, and 53 denotes a signal power to interference power ratio (SIR) averaging section. The components similar to those of the second or the third embodiment are attached with like reference numerals, and their explanation will be omitted. The soft decision correction value-for-subcarrier-group estimator 5 carries out the same operation on each subcarrier group. Therefore, particularly, the operation carried out to the subcarrier group signal number 1 will be explained here.

The divider 51-1 divides the calculation result of the squaring section 46-1 by the calculation result of the averaging section 50-1, thereby to obtain a signal power to interference power ratio (SIR) estimate value. The divider 51-1 outputs this SIR estimate value to the SIR averaging section 53.

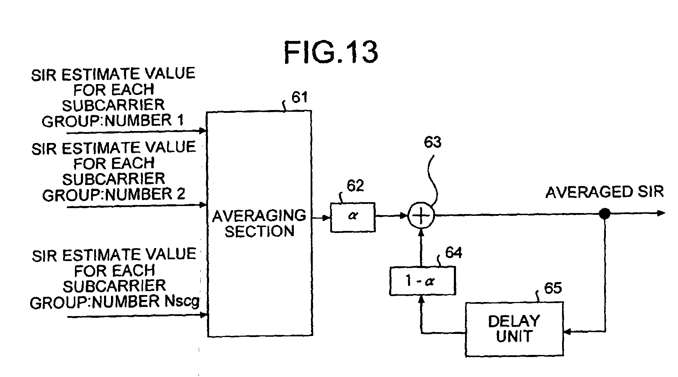

Fig. 13 shows a configuration of the SIR averaging section 53. In Fig. 13, 61 denotes an averaging section, 62 denotes a coefficient multiplier, 63 denotes an adder, 64 denotes a coefficient multiplier, and 65 denotes a delay unit.

The SIR averaging section 53 receives the SIR estimate value for each subcarrier group, and the averaging section 61 calculates the average value of the SIR estimate values of all the subcarrier groups. The coefficient multiplier 62 multiplies the average value of the SIR estimate value by a coefficient α (where α is a positive number not larger than 1). The adder 63 adds the multiplication result to the output value from the coefficient multiplier 64, thereby to obtain the averaged SIR, and outputs the averaged SIR to the multipliers 52-1 to 52-n. The delay unit 65 delays the averaged SIR by the period (one slot period) during which the SIR estimate value for each subcarrier group is updated. Therefore, the coefficient multiplier 64 multiplies the delayed averaged SIR by a coefficient 1 - α, and outputs the multiplied result to the adder 63.

The multiplier 52-1 multiplies the signal amplitude of the known series portion received from the absolute value section 45-1 by the averaged SIR received from the SIR averaging section 53. The multiplier 52-1 outputs the multiplied result to the soft decision data preparing section 311 as the soft decision correction value of the subcarrier group signal number 1.

As explained above, according to the present embodiment, the signal amplitude of the known series portion and the averaged SIR are multiplied to obtain a product as the soft decision correction value for each subcarrier group by using the signal of the known series portion. Further, the soft decision data for each bit is corrected by using the soft decision correction value, and the turbo decoding is carried out thereafter. This makes it possible to generate high-precision soft decision data, and it is possible to obtain decoded data with small error. Therefore, it is possible to realize high throughput like in the first to the third embodiments even when the turbo codes are used and the information transmission speed is changed adaptively.

According to the present embodiment, it is possible to more increase the estimate precision by averaging the products of the soft decision correction values, that is, the products of the signal amplitudes and the averaged SIRs of the known series portion, over a plurality of slots.

As explained above, according to the present invention, the channel estimate value is calculated for each subcarrier by using the signal of the common pilot portion. Further, the amplitude components (in absolute values) of the channel estimate values are averaged for each subcarrier group. The soft decision data for each bit is corrected by using the averaged amplitude component of the channel estimate value. This makes it possible to generate high-precision soft decision data, and it is possible to obtain decoded data with small error. Therefore, there is an effect that it is possible to realize high throughput even when the turbo codes are used and the information transmission speed is changed adaptively.

According to the next invention, the soft decision correction value is calculated for each subcarrier group by using the signal of the known series portion. Further, the soft decision data for each bit is corrected by using the soft decision correction value. This makes it possible to generate high-precision soft decision data, and it is possible to obtain decoded data with small error. Therefore, there is an effect that it is possible to realize high throughput even when the turbo codes are used and the information transmission speed is changed adaptively.

According to the next invention, the signal amplitude of the known series portion is calculated as the soft decision correction value, and the soft decision data for each bit is corrected by using the signal amplitude of the known series portion. This makes it possible to generate high-precision soft decision data, and it is possible to obtain decoded data with small error. Therefore, there is an effect that it is possible to realize high throughput even when the turbo codes are used and the information transmission speed is changed adaptively.

According to the next invention, the signal power to interference power ratio of the known series portion is calculated as the soft decision correction value. Further, the soft decision data for each bit is corrected by using the signal power to interference power ratio of the known series portion. This makes it possible to generate high-precision soft decision data, and it is possible to obtain decoded data with small error. Therefore, there is an effect that it is possible to realize high throughput even when the turbo codes are used and the information transmission speed is changed adaptively.

According to the next invention, the signal amplitude of the known series portion and the average value of the signal power to interference power ratios of the known series portion, are calculated. The soft decision data for each bit is corrected, by using the product (the soft decision compensation value) of the signal amplitude and the average value of the signal power to interference power ratios. This makes it possible to generate high-precision soft decision data, and it is possible to obtain decoded data with small error. Therefore, there is an effect that it is possible to realize high throughput even when the turbo codes are used and the information transmission speed is changed adaptively.

According to the next invention, the receiving apparatus selects the encoding rate based on the reliability information for the decoded data, and notifies the transmitting apparatus of the encoding rate through the up link. The transmitting apparatus carries out the encoding processing by using the notified encoding rate. This makes it possible to execute an optimum encoding processing at any time. Therefore, there is an effect that it is possible to realize high throughput while maintaining predetermined transmission quality.

According to the next invention, the receiving apparatus selects the modulation multivalue number based on the reliability information for the decoded data, and notifies the transmitting apparatus of the modulation multivalue number through the up link. The transmitting apparatus carries out a modulation processing based on the modulation system corresponding to the notified multivalue number. This makes it possible to execute an optimum modulation processing at any time. Therefore, there is an effect that it is possible to realize high throughput while maintaining predetermined transmission quality.

According to the next invention, the receiving apparatus selects the encoding rate or the modulation multivalue number based on the average signal power to average noise power ratio of the soft decision value, and notifies the transmitting apparatus of the encoding rate or the modulation multivalue number through the up link. The transmitting apparatus carries out an optimum encoding processing or modulation processing based on the encoding rate or the modulation multivalue number notified. Thus, there is an effect that it is possible to realize high throughput while maintaining predetermined transmission quality.

According to the next invention, the encoding rate or the modulation multivalue number is selected based on the average signal amplitude of the soft decision value, and the encoding rate or the modulation multivalue number is notified to the transmitting apparatus through the up link. The transmitting apparatus carries out an optimum encoding processing or modulation processing based on the notified encoding rate or modulation multivalue number. Thus, there is an effect that it is possible to realize high throughput in a simple method while maintaining predetermined transmission quality.

According to the next invention, the encoding rate or the modulation multivalue number is selected based on the average signal power of the soft decision value, and the encoding rate or the modulation multivalue number is notified to the transmitting apparatus through the up link. The transmitting apparatus carries out an optimum encoding processing or modulation processing based on the notified encoding rate or modulation multivalue number. Thus, there is an effect that it is possible to realize high throughput in a simple method while maintaining predetermined transmission quality.

According to the next invention, the soft decision data for each bit is corrected by using the amplitude component of the channel estimate value, and the turbo decoding is carried out thereafter. Thus, there is an effect that it is possible to realize high throughput even when the turbo codes are used.

According to the next invention, the soft decision data for each bit is corrected by using the amplitude component of the channel estimate value, and the Viterbi decoding is carried out thereafter. Thus, there is an effect that it is possible to realize high throughput in a simple configuration.

According to the next invention, the encoding processing is carried out by using the encoding rate notified from the receiving apparatus. Based on this, it is always possible to execute an optimum encoding processing. Therefore, there is an effect that it is possible to realize high throughput while maintaining predetermined transmission quality.

According to the next invention, the modulation processing is carried out by using the modulation system corresponding to the modulation multivalue number notified from the receiving apparatus. Based on this, it is always possible to execute an optimum modulation processing. Therefore, there is an effect that it is possible to realize high throughput while maintaining predetermined transmission quality.

According to the next invention, the channel estimate value is calculated for each subcarrier by using the signal of the common pilot portion. Further, the amplitude components (in absolute values) of the channel estimate values are averaged for each subcarrier group. The soft decision data for each bit is corrected by using the averaged amplitude component of the channel estimate value. This makes it possible to generate high-precision soft decision data, and it is possible to obtain decoded data with small error. Therefore, there is an effect that it is possible to realize high throughput even when the turbo codes are used and the information transmission speed is changed adaptively.

According to the next invention, the soft decision correction value is calculated for each subcarrier group by using the signal of the known series portion. The soft decision data for each bit is corrected by using the soft decision correction value. This makes it possible to generate high-precision soft decision data, and it is possible to obtain decoded data with small error. Therefore, there is an effect that it is possible to realize high throughput even when the turbo codes are used and the information transmission speed is changed adaptively.

According to the next invention, the signal amplitude of the known series portion is calculated as the soft decision correction value, and the soft decision data for each bit is corrected by using the signal amplitude of the known series portion. This makes it possible to generate high-precision soft decision data, and it is possible to obtain decoded data with small error. Therefore, there is an effect that it is possible to realize high throughput even when the turbo codes are used and the information transmission speed is changed adaptively.

According to the next invention, the signal power to interference power ratio of the known series portion is calculated as the soft decision correction value, and the soft decision data for each bit is corrected by using the signal power to interference power ratio of the known series portion. This makes it possible to generate high-precision soft decision data, and it is possible to obtain decoded data with small error. Therefore, there is an effect that it is possible to realize high throughput even when the turbo codes are used and the information transmission speed is changed adaptively.

According to the next invention, the signal amplitude of the known series portion and the average value of the signal power to interference power ratios of the known series portion, are calculated. The soft decision data for each bit is corrected, by using the product (the soft decision compensation value) of the signal amplitude and the average value of the signal power to interference power ratios. This makes it possible to generate high-precision soft decision data, and it is possible to obtain decoded data with small error. Therefore, there is an effect that it is possible to realize high throughput even when the turbo codes are used and the information transmission speed is changed adaptively.

According to the next invention, the encoding rate or the modulation multivalue number is selected based on the average signal power to average noise power ratio of the soft decision value, and the encoding rate or the modulation multivalue number is notified to the transmitting apparatus through the up link. Based on this, the transmitting apparatus carries out an optimum encoding processing or modulation processing according to the notified encoding rate or modulation multivalue number. Therefore, there is an effect that it is possible to realize high throughput in a simple method while maintaining predetermined transmission quality.

According to the next invention, the encoding rate or the modulation multivalue number is selected based on the average signal amplitude of the soft decision value, and the encoding rate or the modulation multivalue number is notified to the transmitting apparatus through the up link. Based on this, the transmitting apparatus carries out an optimum encoding processing or modulation processing according to the notified encoding rate or modulation multivalue number. Therefore, there is an effect that it is possible to realize high throughput in a simple method while maintaining predetermined transmission quality.

According to the next invention, the encoding rate or the modulation multivalue number is selected based on the average signal power of the soft decision value, and the encoding rate or the modulation multivalue number is notified to the transmitting apparatus through the up link. Based on this, the transmitting apparatus carries out an optimum encoding processing or modulation processing according to the notified encoding rate or modulation multivalue number. Therefore, there is an effect that it is possible to realize high throughput in a simple method while maintaining predetermined transmission quality.

### INDUSTRIAL APPLICABILITY

As explained above, the mobile communication system, the multicarrier CDMA transmitting apparatus, and the multicarrier CDMA receiving apparatus according to the present invention are useful for a mobile communication system that employs the multicarrier CDMA system. Particularly, they are useful for the multicarrier CDMA transmitting apparatus, and the multicarrier CDMA receiving apparatus used in a frequency selective fading transmission line.

## Claims

1. A mobile communication system that employs a multicarrier CDMA system, wherein
a transmission side comprises:
a channel encoding unit that carries out a channel encoding processing at a predetermined encoding rate;
a modulating unit that prepares slots for each subcarrier group, each including a common pilot portion and a data portion, based on channel-encoded transmission data, and carries out a modulation processing on each subcarrier signal in the subcarrier group; and
a transmitting unit that transmits a signal generated by subjecting each modulated subcarrier signal in the subcarrier group to a predetermined processing, to a transmission line, and
a reception side comprises:
a channel estimating/fading compensating unit that carries out channel estimation and fading compensation based on a common pilot portion included in each subcarrier signal generated based on a predetermined reception processing;
a signal amplitude estimating unit that estimates an amplitude of a signal in each result of the channel estimation;
a demodulating/correcting unit that carries out a soft decision processing with respect to each subcarrier signal after the fading compensation, and corrects a soft decision value by using the signal amplitude estimate value; and
a channel decoding unit that carries out channel decoding with respect to corrected soft decision value according to an encoding rate.

2. The mobile communication system according to claim 1,
wherein the channel decoding unit includes a reliability information generating unit that generates reliability information for decoded data, and
the channel encoding unit carries out a channel encoding processing by adaptively changing the encoding rate according to reliability information notified from the reception side.

3. The mobile communication system according to claim 2, wherein
the reliability information generating unit calculates an average signal power to average noise power ratio of the soft decision value as the reliability information.

4. The mobile communication system according to claim 2, wherein
the reliability information generating unit calculates an average signal amplitude of the soft decision value as the reliability information.

5. The mobile communication system according to claim 2, wherein
the reliability information generating unit calculates an average signal power of the soft decision value as the reliability information.

6. The mobile communication system according to claim 1, wherein
the channel decoding unit includes a reliability information generating unit that generates reliability information for decoded data, and
the modulating unit carries out a modulation processing by adaptively changing a modulation multivalue number according to reliability information notified from the reception side.

7. The mobile communication system according to claim 6, wherein
the reliability information generating unit calculates an average signal power to average noise power ratio of the soft decision value as the reliability information.

8. The mobile communication system according to claim 6, wherein
the reliability information generating unit calculates an average signal amplitude of the soft decision value as the reliability information.

9. The mobile communication system according to claim 6, wherein
the reliability information generating unit calculates an average signal power of the soft decision value as the reliability information.

10. The mobile communication system according to claim 1, employing turbo codes as error correction codes used for the channel encoding processing and the channel decoding processing.

11. The mobile communication system according to claim 1, employing convolutional codes as error correction codes used for the channel encoding processing and the channel decoding processing.

12. A mobile communication system that employs a multicarrier CDMA system, wherein
a transmission side comprises:
a channel encoding unit that carries out a channel encoding processing at a predetermined encoding rate;
a modulating unit that prepares slots for each subcarrier group, each including a common pilot portion, a known series portion known at a reception side, and a data portion, based on channel-encoded transmission data, and carries out a modulation processing on each subcarrier signal in the subcarrier group; and
a transmitting unit that transmits a signal generated by subjecting each modulated subcarrier signal in the subcarrier group to a predetermined processing, to a transmission line, and
the reception side comprises:
a channel estimating/fading compensating unit that carries out channel estimation and fading compensation based on a common pilot portion included in each subcarrier signal generated based on a predetermined reception processing;
a soft decision correction value estimating unit that estimates a soft decision correction value by using the known series portion;
a demodulating/correcting unit that carries out a soft decision processing with respect to each subcarrier signal after the fading compensation, and corrects a soft decision value by using the soft decision correction value; and
a channel decoding unit that carries out a channel decoding with respect to the corrected soft decision value according to the encoding rate.

13. The mobile communication system according to claim 12, wherein
the soft decision correction value estimating unit estimates a signal amplitude of the known series portion as the soft decision correction value.

14. The mobile communication system according to claim 12, wherein
the soft decision correction value estimating unit estimates a signal power to interference power ratio of the known series portion as the soft decision correction value.

15. The mobile communication system according to claim 12, wherein
the soft decision correction value estimating unit estimates a signal amplitude and a signal power to interference power ratio of the known series portion, and sets, as the soft decision correction value, a product of the signal amplitude of the known series portion and a result of averaging ratios of signal power to interference power.

16. The mobile communication system according to claim 12, wherein
the channel decoding unit includes a reliability information generating unit that generates reliability information for decoded data, and
the channel encoding unit carries out a channel encoding processing by adaptively changing the encoding rate according to reliability information notified from the reception side.

17. The mobile communication system according to claim 16, wherein
the reliability information generating unit calculates an average signal power to average noise power ratio of the soft decision value as the reliability information.

18. The mobile communication system according to claim 16, wherein
the reliability information generating unit calculates an average signal amplitude of the soft decision value as the reliability information.

19. The mobile communication system according to claim 16, wherein
the reliability information generating unit calculates an average signal power of the soft decision value as the reliability information.

20. The mobile communication system according to claim 12, wherein
the channel decoding unit includes a reliability information generating unit that generates reliability information for decoded data, and
the modulating unit carries out a modulation processing by adaptively changing a modulation multivalue number according to reliability information notified from the reception side.

21. The mobile communication system according to claim 20, wherein
the reliability information generating unit calculates an average signal power to average noise power ratio of the soft decision value as the reliability information.

22. The mobile communication system according to claim 20, wherein
the reliability information generating unit calculates an average signal amplitude of the soft decision value as the reliability information.

23. The mobile communication system according to claim 20, wherein
the reliability information generating unit calculates an average signal power of the soft decision value as the reliability information.

24. The mobile communication system according to claim 12, employing turbo codes as error correction codes used for the channel encoding processing and the channel decoding processing.

25. The mobile communication system according to claim 12, employing convolutional codes as error correction codes used for the channel encoding processing and the channel decoding processing.

26. A multicarrier CDMA transmitting apparatus comprising a turbo encoding unit that carries out a turbo encoding processing by adaptively changing an encoding rate according to reliability information notified from a reception side.

27. A multicarrier CDMA transmitting apparatus comprising a modulating unit that carries out a modulation processing by adaptively changing a modulation multivalue number according to reliability information notified from a reception side.

28. A multicarrier CDMA receiving apparatus comprising:
a channel estimating/fading compensating unit that carries out channel estimation and fading compensation based on a common pilot portion included in each subcarrier signal generated based on a predetermined reception processing;
a signal amplitude estimating unit that estimates an amplitude of a signal in each result of the channel estimation;
a demodulating/correcting unit that carries out a soft decision processing with respect to the subcarrier signal after the fading compensation, and corrects a soft decision value by using an estimate value of the signal amplitude; and
a turbo decoding unit that carries out turbo decoding with respect to the soft decision value after the correction according to an encoding rate.

29. The multicarrier CDMA receiving apparatus according to claim 28, wherein
the turbo decoding unit includes a reliability information generating unit that calculates an average signal power to average noise power ratio of the soft decision value as the reliability information for decoded data.

30. The multicarrier CDMA receiving apparatus according to claim 28, wherein
the turbo decoding unit comprises a reliability information generating unit that calculates an average signal amplitude of the soft decision value as reliability information for the decoded data.

31. The multicarrier CDMA receiving apparatus according to claim 28, wherein
the turbo decoding unit includes a reliability information generating unit that calculates an average signal power of the soft decision value as reliability information for decoded data.

32. A multicarrier CDMA receiving apparatus comprising:
a channel estimating/fading compensating unit that carries out channel estimation and fading compensation based on a common pilot portion included in each subcarrier signal generated based on a predetermined reception processing;
a soft decision correction value estimating unit that estimates a soft decision correction value by using a known series portion known at a reception side included in the subcarrier signal;
a demodiulating/correcting unit that carries out a soft decision processing with respect to the subcarrier signal after the fading compensation, and corrects a soft decision value by using the soft decision correction value; and
a turbo decoding unit that carries out turbo decoding with respect to the soft decision value after the correction according to an encoding rate.

33. The multicarrier CDMA receiving apparatus according to claim 32, wherein
the soft decision correction value estimating unit estimates a signal amplitude of the known series portion as the soft decision correction value.

34. The multicarrier CDMA receiving apparatus according to claim 32, wherein
the soft decision correction value estimating unit estimates a signal power to interference power ratio of the known series portion as the soft decision correction value.

35. The multicarrier CDMA receiving apparatus according to claim 32, wherein
the soft decision correction value estimating unit estimates a signal amplitude and a signal power to interference power ratio of the known series portion, and sets, as the soft decision correction value, a product of the signal amplitude of the known series portion and a result of averaging ratios of signal power to interference power.

36. The multicarrier CDMA receiving apparatus according to claim 32, wherein
the turbo decoding unit includes a reliability information generating unit that calculates an average signal power to average noise power ratio of the soft decision value as reliability information for decoded data.

37. The multicarrier CDMA receiving apparatus according to claim 32, wherein
the turbo decoding unit includes a reliability information generating unit that calculates an average signal amplitude of the soft decision value as reliability information for decoded data.

38. The multicarrier CDMA receiving apparatus according to claim 32, wherein
the turbo decoding unit includes a reliability information generating unit that calculates an average signal power of the soft decision value as reliability information for decoded data.
